Europäisches Patentamt

**European Patent Office**

**Office européen des brevets**

(11) Veröffentlichungsnummer : **0 143 165**
**B1**

(12). **EUROPÄISCHE PATENTSCHRIFT**

(45) Veröffentlichungstag der Patentschrift :
28.09.88

(21) Anmeldenummer : 84108248.0

(22) Anmeldetag : 13.07.84

(51) Int. Cl.⁴ : **G 01 B 11/14, G 01 D 5/26**

(54) Abstandssensor zur Ermittlung des Abstandes zu einem nahegelegenen Objekt.

(30) Priorität : 03.10.83 US 538410

(43) Veröffentlichungstag der Anmeldung :
05.06.85 Patentblatt 85/23

(45) Bekanntmachung des Hinweises auf die Patenterteilung : 28.09.88 Patentblatt 88/39

(84) Benannte Vertragsstaaten :
AT BE CH DE FR GB IT LI LU NL SE

(56) Entgegenhaltungen :
DE-A- 2 845 850
DE-A- 3 214 252

(73) Patentinhaber : Siemens Aktiengesellschaft Berlin
und München
Wittelsbacherplatz 2
D-8000 München 2 (DE)

(72) Erfinder : Chiu, Ming-Yee
78 Boothby Drive
Mt. Laurel, NJ 08054 (US)

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Die Erfindung betrifft einen Abstandssensor zur Ermittlung des Abstandes zu einem nahegelegenen Objekt nach dem Oberbegriff des Anspruchs 1.

In vielen industriellen Steuereinrichtungen werden häufig Abstandssensoren eingesetzt, da sie preiswert, kompakt und zuverlässig sind. Unter einem Abstandssensor versteht man dabei eine Einrichtung, welche darauf anspricht, ob sich ein Objekt in der Nähe des Sensors befindet. Die meisten dieser Einrichtungen stellen nur die Anwesenheit oder Abwesenheit eines Objekts innerhalb ihres Ansprechbereichs fest. Es gibt jedoch auch einige derartige Einrichtungen, die den Abstand zwischen dem Sensor und dem Objekt ermitteln können.

Grundsätzlich gibt es vier verschiedene Arten von Abstandssensoren. Dies sind :

1) Nach dem Reflexionsprinzip arbeitende optische Abstandssensoren ;

2) elektromagnetische Abstandssensoren ;

3) Ultraschall-Abstandssensoren ; und

4) hydraulische oder pneumatische Abstandssensoren.

Die vorliegende Erfindung befaßt sich mit der ersten Art von Abstandssensoren, nämlich nach dem Reflexionsprinzip arbeitenden optischen Abstandssensoren.

Nach dem Reflexionsprinzip arbeitende optische Abstandssensoren können entweder mit sichtbarem Licht oder mit infrarotem Licht arbeiten. Das Wirkungsprinzip dieser Art von Sensoren besteht dabei darin, auf ein Objekt einen Lichtstrahl zu richten und einige physikalische Parameter des reflektierten Lichtes zu messen. In Abhängigkeit von den gemessenen Parametern können optische Abstandssensoren in mindestens drei Arten unterteilt werden :

1) Abstandssensoren mit Amplitudenmessungen ;

2) Abstandssensoren mit Frequenzmessungen ; und

3) nach Triangulationsverfahren arbeitende Abstandssensoren.

Abstandssensoren, welche das Prinzip der Amplitudenmessung verwenden, erhalten die Abstandsinformation aus der Strahlungsintensität des reflektierten Lichtes. Abstandssensoren, welche das Prinzip der Frequenzmessung verwenden, ermitteln den Abstand zum Objekt aus der Frequenz des reflektierten, modulierten Lichtes. Bei den auf Triangulationsverfahren beruhenden Messungen gilt das Hauptinteresse der örtlichen Lage des reflektierten Lichtflecks in bezug auf den Sensor. Das Prinzip der Frequenzmessung wird in Steuereinrichtungen selten angewandt, da die entsprechenden Sensoren sperrig und teuer sind. Die meisten optischen Abstandssensoren beruhen daher auf Amplitudenmessungen oder auf Messungen nach einem Triangulationsverfahren. Von diesen beiden Prinzipien ist dabei das auf Amplitudenmessungen beruhende Prinzip am einfachsten und am preisgünstigsten, da nur eine Lumineszenzdiode, eine Fotodiode und ein paar kleine, einfache Linsen zu einem Kompakten, wenige Kubikzentimeter großen Abstandssensor zusammengefügt werden. Die vorliegende Erfindung betrifft derartige Abstandssensoren.

Es gibt verschiedene Bauarten von auf dem Reflexionsprinzip beruhenden optischen Abstandssensoren mit Amplitudenmessungen. Eine Bauart ist ein Abstandssensor, der nur aus einer Lumineszendiode und einer Fotodiode besteht. Eine Lichtbündelung ist dabei nicht erforderlich. Wenn dies auch der einfachste Abstandssensor ist, den man herstellen kann, so ist jedoch sein Ansprechbereich begrenzt und es fehlt die Fähigkeit den Abstand zu einem Objekt genau zu ermitteln.

Eine andere Bauart eines auf dem Reflexionsprinzip beruhenden Abstandsensors ist in DE-A-28 45 850 beschrieben. Diese Version, die bereits mit zwei photoelektrischen Wandlern ausgerüstet ist, liefert jedoch bedingt durch deren Anordnung kein Signal, das weitgehend unabhängig vom Abstand zwischen Sensor und Objekt ist und somit zur Normierung herangezogen werden könnte und damit den den Störfaktor der Oberflächeneigenschaften des Objektes bei der Abstandsmessung ausschaltet.

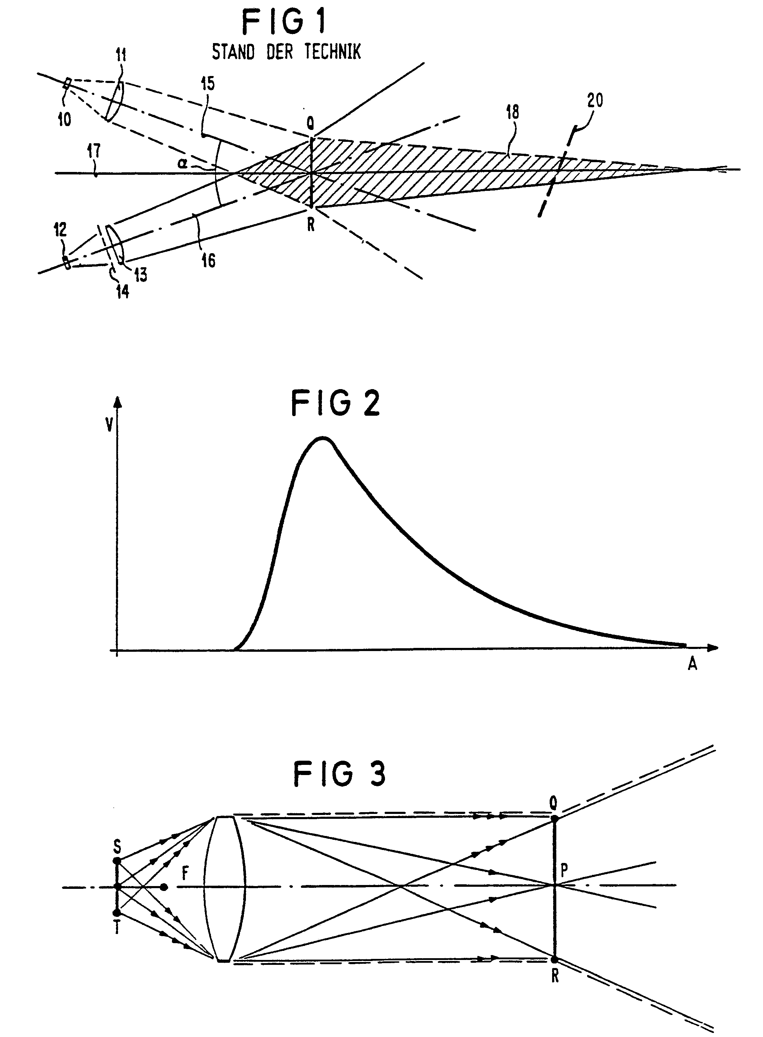

Eine weitere Bauart von auf dem Reflexionsprinzip beruhenden optischen Abstandssensoren mit Amplitudenmessungen ist in Figur 1 dargestellt. Dieser Abstandssensor ist aus den Artikeln « Optical Proximity Sensor For Manipulators » von A.R. Johnston in IPL Technical Memorandum 33-612, California Institute of Technology, Pasadena (USA), 1973 und « Sensors, Controls, and Man-Maschine Interface For Advanced Teleoperations » von A.A. Bejczy in Science, Vol. 209, Juni 1980 bekannt.

Der in Figur 1 dargestellte bekannte Abstandssensor verwendet zwei kollimierende Linsen, von welchen eine vor einer Infrarot-Lumineszenzdiode und die andere vor einem Fotodetektor angeordnet ist. Ein an das von der Infrarot-Lumineszenzdiode ausgestrahlte Licht angepaßtes Bandpaß-Spektralfilter ist hinter der dem Fotodetektor zugeordneten Linse angeordnet, um den Einfluß von unerwünschtem Umgebungslicht zu eliminieren.

Diese Art von Abstandssensoren arbeitet nach dem folgenden Prinzip :

Die Infrarot-Lumineszendiode beleuchtet einen konusförmigen Raum, wozu eine kleine Linse in der in Figur 3 dargestellten Weise verwendet wird. Die Lichtstrahlen von einem zentralen Punkt der Infrarot-Lumineszenzdiode werden in einem Punkt P fokussiert. Infolge der endlichen Größe der Infrarot-Lumineszenzdiode werden aber ebenso die beiden Randpunkte der Infrarot-Lumineszenzdiode auf Punkte Q und R abgebildet. Aus diesem Grund besitzen die seitlichen Grenzlinien der von der Infrarot-Lumineszenzdiode ausgehenden Lichtstrahlen eine Kombinierte zylindrische und konische Konfiguration, sowie es in Figur 3 durch die gestrichelten Linien aufgezeigt ist. In dem Abstandssensor (Figur 1) ist ein Fotodetektor gleich neben der Infrarot-Lumineszenzdiode angeordnet, aber mit einem geringen Winkel schräg gestellt. Infolge der Symmetrie bezüglich einer zentralen Achse fallen die Bilder der Infrarot-Lumineszenzdiode und des Fotodetektors in der Ebene Q-R zusammen. Wegen des geringen Schrägstellungswinkels fallen die Bilder dabei nicht exakt zusammen, wobei jedoch das Ergebnis praktisch gleich ist. Da die Infrarot-Lumineszenzdiode nur den in Figur 1 durch die gestrichelten Linien begrenzten Raum beleuchtet und da der Fotodetektor nur das reflektierte Licht innerhalb des durch die voll ausgezogenen Linien begrenzten Raumes empfängt, spricht der Abstandssensor nur innerhalb des durch eine Schraffur hervorgehobenen Überschneidungsbereichs an.

Figur 2 zeigt die Ausgangsspannung des Fotodetektors als Funktion des Abstandes zwischen Objekt und Sensor. Die Spitze der Ausgangsspannung tritt dabei dann auf, wenn sich das Objekt in der Bildebene Q-R der Infrarot-Lumineszenzdiode und des Fotodetektors befindet. Um die doppelten Werte in der Kurve der Ausgangsspannung zu vermeiden, wird das Gehäuse des Sensors normalerweise so ausgebildet, daß es sich in Längsrichtung bis zur Ebene Q-R erstreckt und kein Objekt in das Ansprechgebiet zwischen der Ebene Q-R einerseits und der Infrarot-Lumineszenzdiode und dem Fotodetektor andererseits gelangen kann. Dieses gesperrte Ansprechgebiet entspricht in Figur 2 dem links vom Scheitelwert der Kurve der Ausgangsspannung liegenden Bereich.

Da der Abstand des Objekts von dem Abstandssensor in Abhängigkeit von der Strahlungsintensität des auf den Fotodetektor fallenden Lichtes ermittelt wird, beeinträchtigt jegliche Erscheinung, die diese Strahlungsintensität verändert, die Bestimmung des Abstandes. Im Hinblick darauf müssen drei Hauptfaktoren in Betracht gezogen werden:

1) Die Strahlungsintensität der durch die Infrarot-Lumineszenzdiode gebildeten Lichtquelle;

2) die Reflexionseigenschaften des Objekts; und

3) der Neigungswinkel der Objektoberfläche relativ zum Lichtstrahl.

Der erste Faktor kann dabei leicht gehandhabt werden, da die Strahlungsintensität der Infrarot-Lumineszenzdiode gleich zu Anfang kalibriert werden kann und dann über längere Zeit konstant bleibt. Die letzten beiden Faktoren sind jedoch für den Sensor nicht bekannt, so daß es keinen Weg zur Korrektur dieser Faktoren gibt, es sei denn, die Art und die Orientierung des von Sensor zu erfassenden Objekts sind von vornherein bekannt.

Der Erfindung liegt die Aufgabe zugrunde, einen Abstandssensor zu schaffen, mit welchem der Abstand zu einem Objekt unabhängig von den Reflexionseigenschaften des Objekts und ggf. auch unabhängig von der Orientierung des Objekts relativ zum Sensor genau ermittelt werden kann.

Diese Aufgabe wird durch die Merkmale des Anspruchs 1 gelöst.

Vorteilhafte Ausgestaltungen der Erfindung gehen aus den abhängigen Ansprüchen hervor.

Der Erfindung liegt die Erkenntnis zugrunde, in einem Abstandssensor insgesamt zwei lichtempfindliche Empfänger vorzusehen, so daß der eine lichtempfindliche Empfänger den Abstand zum Objekt ermitteln kann, so wie er durch die Reflexionseigenschaften und die Orientierung des Objekts modifiziert wird, während der zweite lichtempfindliche Empfänger nur die von den Reflexionseigenschaften und der Orientierung des Objekts abhängigen Faktoren aber keine verwertbare Information über den Abstand ermittelt. Auf diese Weise ist es möglich, die Information über den Abstand zu normieren und die Abstandsmessung unabhängig von den durch die Reflexionseigenschaften und die Orientierung des Objekts bedingten Faktoren durchzuführen. Da das Signal des zweiten lichtempfindlichen Empfängers bei kleinen Abstandsänderungen nahezu konstant ist, reicht es aus, wenn die beiden lichtempfindlichen Empfänger im wesentlichen den gleichen Abstand zum Objekt haben d. h. Toleranzen von seiten der Konstruktion oder der Fertigung sind unerheblich.

Vorzugsweise wird der zweite lichtempfindliche Empfänger so nahe wie möglich neben der Lichtquelle angeordnet. Das von dem zweiten lichtempfindlichen Empfänger erzeugte Signal ist dann von dem Abstand zum Objekt vollkommen unabhängig, da der zweite lichtempfindliche Empfänger den gleichen Raum optisch erfaßt, der von der Lichtquelle optisch erfaßt wird. Idealerweise sollte die Position des zweiten lichtempfindlichen Empfängers mit der der Lichtquelle zusammenfallen, obwohl dies praktisch nicht möglich ist. Der von der Lichtquelle beleuchtete Oberflächenbereich würde dann von dem zweiten lichtempfindlichen Empfänger vollständig erfaßt werden, wobei es keine Rolle spielt, wo sich das Objekt befindet. Wird dann das Ausgangssignal des ersten lichtempfindlichen Empfängers durch das des zweiten lichtempfindlichen Empfängers dividiert, so bildet der Quotient ein Maß, welches nur von dem Abstand zwischen dem Objekt und den beiden lichtempfindlichen Empfängern abhängt.

Der erfindungsgemäße Abstandssensor kann kompakt und preisgünstig hergestellt werden. Außerdem kann er auch so ausgebildet werden, daß sich die Anwesenheit von Umgebungslicht nicht auf die Genauigkeit auswirkt. Ein weiterer Vorteil des erfindungsgemäßen Abstandssensors besteht darin, daß der Ansprechbereich des Sensors auch einstellbar ausgeführt werden kann.

Ausführungsbeispiele der Erfindung sind in der Zeichnung dargestellt und werden im folgenden näher beschrieben. Es zeigen:

Figur 1 eine stark vereinfachte schematische Darstellung eines Abstandssensors nach dem Stand der Technik,

Figur 2 das über den Abstand zum Objekt aufgetragene Ausgangssignal des in Figur 1 dargestellten Abstandssensors,

Figur 3 eine schematische Darstellung eines in den Abstandssensor nach Figur 1 eingesetzten optischen Systems mit einer einzigen Linse,

Figur 4 eine stark vereinfachte schematische Prinzipdarstellung eines erfindungsgemäßen Abstandssensors,

Figur 5 die beiden über den Abstand zu einem Objekt aufgetragenen Ausgangssignale des in Figur 4 dargestellten Abstandssensors,

Figur 6 das über den Abstand zu einem Objekt aufgetragene, genormte Ausgangssignal des in Figur 4 dargestellten Abstandssensors,

Figur 7 ein erstes optisches System, das bei einem erfindungsgemäßen Abstandssensor eingesetzt werden kann,

Figur 8 ein zweites optisches System, das bei einem erfindungsgemäßen Abstandssensor eingesetzt werden kann,

Figur 9 eine erste bevorzugte Ausführungsform eines erfindungsgemäßen Abstandssensors,

Figur 10 eine zweite bevorzugte Ausführungsform eines erfindungsgemäßen Abstandssensors,

Figur 11 eine dritte bevorzugte Ausführungsform eines erfindungsgemäßen Abstandssensors,

Figur 12 einen bei dem Abstandssensor nach Figur 11 eingesetzten Umpolschalter und

Figur 13 ein Flußdiagramm, welches die Arbeitsweise des in dem Abstandssensor nach Figur 11 eingesetzten Mikrocomputers aufzeigt.

Wie bereits erwähnt wurde, zeigen die Figuren 1 und 2 einen auf Amplitudenmessungen beruhenden optischen Abstandssensor nach dem Stand der Technik. Das optische System dieses Abstandssensors ist in Figur 1 aufgezeigt, während in Figur 2 die Ausgangsspannung V als Funktion des Abstandes A zu einem Objekt aufgezeigt ist.

Figur 1 zeigt ein System mit einer Lumineszenzdiode 10 und einer dieser Lumineszenzdiode 10 zugeordneten Linse 11, sowie einen Fotodektor 12 und eine diesem Fotodetektor 12 zugeordnete Linse 13. Ein Filter 14, welches für das gleiche Strahlungsspektrum, wie es von der Lumineszenzdiode 10 ausgestrahlt wird, durchlässig ist, ist zwischen dem Fotodetektor 12 und der zugehörigen Linse 13 angeordnet. Der Zweck dieses Filters 14 ist es, die Einflüsse von Umgebungslicht auf die Abstandsmessungen zu reduzieren.

Sowohl die Lumineszenzdiode 10 als auch der Fotodetektor 12 sind von den zugehörigen Linsen 11 bzw. 13 geringfügig weiter entfernt als die Fokuspunkte dieser Linsen. Aus diesem Grunde arbeiten die beiden in Figur 1 dargestellten optischen Systeme in der in Figur 3 aufgezeigten Weise, wobei das Bild der Lumineszenzdiode 10 oder des Fotodetektors 12 auf eine Ebene Q-P-R fokussiert wird. Dabei sind die Lumineszenzdiode bzw. der Fotodektor, die in der Ebene S-T angeordnet sind, von der optischen Linse etwas weiter entfernt als der Fokuspunkt F.

Die zentralen Achsen der beiden optischen Systeme, nämlich eine erste Achse 15 der Linse 11 und eine zweite Achse 16 der Linse 13, sind in bezug auf eine gemeinsame Achse 17 symmetrisch angeordnet und schließen einen Winkel α ein. Durch diese Anordnung ist eine durch eine Schraffur hervorgehobene Region 18 geschaffen, welche einerseits durch die Lumineszenzdiode 10 beleuchtet ist und andererseits durch den Fotodetektor 12 optisch erfaßt bzw. gesehen wird. Jedes sich innerhalb dieser Region 18 befindliche Objekt wird daher die von der Lumineszenzdiode 10 erzeugte Strahlung auf den Fotodetektor 12 reflektieren.

Vorausgesetzt, daß die reflektierende Oberfläche 20 eines Objekts die gesamte Region 18 schneidet, so wie es durch die gestrichelte Linie angedeutet ist, wird die Amplitude der Ausgangsspannung V des Fotodetektors 12 gemäß der Darstellung in Figur 2 von dem Abstand A des Objekts zu den Linsen 11 und 13 abhängig sein. Dies ist darauf zurückzuführen, daß die Größe der Objektoberfläche, die gleichzeitig von der Lumineszenzdiode 10 beleuchtet und von dem Fotodetektor 12 erfaßt wird, sich mit ihrer Lage entlang der zentralen Achse 17 ändert.

Die von der Oberfläche 20 eines Objekts reflektierte und von dem Fotodetektor 12 erfaßte Strahlung hängt aber leider von dem Winkel zwischen der Oberfläche 20 bezüglich der zentralen Achse 17 und von den Reflexionseigenschaften der Oberfläche 20 ab. Aus diesem Grunde kann das Ausgangssignal V des Fotodetektors 12 kein direktes Maß für den Abstand A zum Objekt sein.

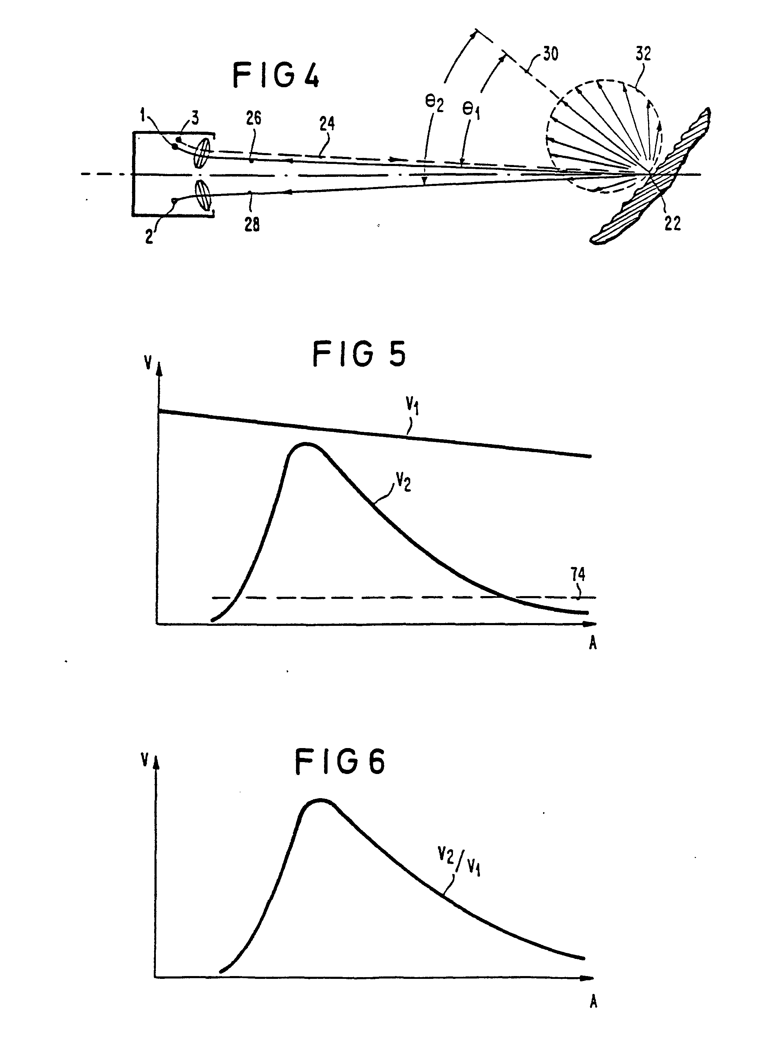

Die Figuren 4, 5 und 6 veranschaulichen einen Abstandssensor, der anhand der Figuren 1 und 2 erläuterten Art, der jedoch zusätzlich die mit der vorliegenden Erfindung erzielbaren Vorteile aufweist. Dieser Abstandssensor besitzt zwei Fotodetektoren 1 und 2. Der eine Fotodetektor 1 ist dabei unmittelbar neben einer Lumineszenzdiode 3 angeordnet, während der zweite Fotodetektor 2 die gleiche Lage einnimmt und der gleichen Funktion dient wie der Fotodetektor 12 in dem in Figur 1 dargestellten Abstandssensor.

In der Figur 4 ist zu erkennen, daß der Fotodetektor 1 genau den gleichen Teil der Oberfläche des Objekts erfaßt bzw. sieht, der von der Lumineszenzdiode 3 beleuchtet wird. Wie bereits in Verbindung mit dem in Figur 1 dargestellten Abstandssensor erläutert wurde, erfaßt bzw. sieht der Fotodetektor 2 einen geringfügig verschiedenen, d. h. kleineren Bereich der Oberfläche des Objekts. Dementsprechend liefert die Ausgangsspannung des Fotodetektors 1 ein Maß für die Reflexionseigenschaften und die Orientierung der Oberfläche des Objekts, während die Ausgangsspannung des Fotodetektors 2 sowohl von diesen beiden Faktoren als auch von dem Abstand zum Objekt abhängig ist.

Die Lichtstrahlen der Lumineszenzdiode 3 gelangen entlang eines durch die gestrichelte Linie 24 aufgezeigten Weges zu einem Punkt 22 auf der Oberfläche des Objekts. Von diesem Punkt 22 werden die Lichtstrahlen dann entlang des Weges 26 auf den Fotodetektor 1 reflektiert. Die Lichtstrahlen werden von dem Punkt 22 ebenso entlang des Weges 28 auf den Fotodetektor 2 reflektiert. Sofern die Oberfläche des Objekts ausreichend weit entfernt ist, ist der Winkel $\theta_1$ zwischen dem Weg 26 und der Normalen 30 der Oberfläche ungefähr gleich groß wie der Winkel $\theta_2$ zwischen dem Weg 28 und der Normalen 30. Infolgedessen entspricht dann im Hinblick auf die dargestellte Reflexionscharakteristik 32 der Anteil der entlang des Weges 28 reflektierten Strahlung im wesentlichen dem Anteil der entlang des Weges 26 reflektierten Strahlung.

Die Ausgangssignale $V_1$ und $V_2$ der Fotodetektoren 1 bzw. 2 sind in Figur 5 dargestellt. Das Ausgangssignal $V_1$ hängt stark von den Reflexionseigenschaften und der Orientierung der Oberfläche des Objekts ab, während es von dem Abstand A des Objekts bei dem hier betrachteten kurzen Abstandsbereich nur geringfügig abhängig ist.

Das Ausgangssignal $V_2$ hängt jedoch nicht nur von den Reflexionseigenschaften und der Orientierung der Oberfläche des Objekts sondern auch in starkem Maße von dem Abstand A des Objekts ab, wobei die Gründe hierfür bereits im Zusammenhang mit den Figuren 1 und 2 erläutert wurden.

Die beiden Ausgangssignale $V_1$ und $V_2$ können dann dazu benutzt werden, ein von dem Abstand A abhängiges Signal zu erzeugen, welches im wesentlichen von des Reflexionseigenschaften und der Orientierung des Objekts unabhängig ist. Dies kann dadurch erreicht werden, daß man die Größe des Ausgangssignals $V_2$ durch diejenige des Ausgangssignals $V_1$ dividiert, wobei das Ergebnis dieses Vorgehens in Figur 6 dargestellt ist.

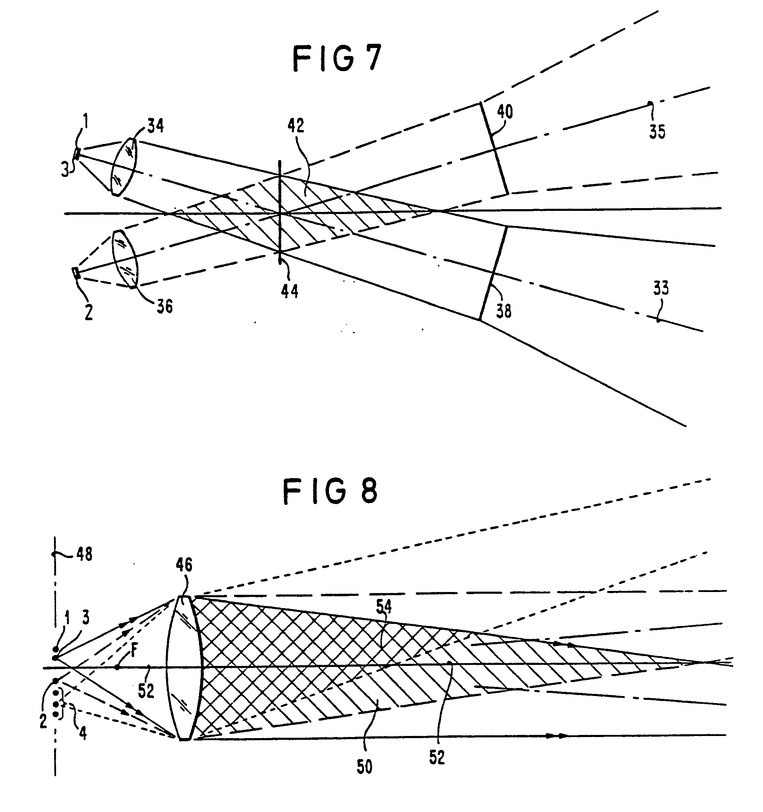

Figur 7 zeigt im Detail ein optisches System, welches entsprechend der vorliegenden Erfindung eingesetzt werden kann. In diesem System sind der Fotodetektor 1 und die Lumineszenzdiode 3 auf einer gemeinsamen ersten Achse 33 angeordnet, wobei diesen beiden Teilen eine separate Linse 34 zugeordnet ist. Der Fotodetektor 2 ist auf einer separaten zweiten Achse 35 angeordnet, und mit einer separaten Linse 36 ausgestattet. Die Linse 34 fokussiert ein Bild des Fotodetektors 1 und der Lumineszenzdiode 3 in eine Bildebene 38. Auf ähnliche Weise fokussiert die Linse 36 ein Bild des Fotodetektors 2 in eine Bildebene 40. Zwischen den Bildebenen 38 und 40 und den Linsen 34 und 36 ist eine gemeinsame Region gebildet, welche durch das schraffierte Gebiet 42 aufgezeigt ist. In dieser Region 42 ist ein Objekt gleichzeitig durch die Lumineszenzdiode 3 beleuchtet und durch den Fotodetektor 2 erfaßbar.

Da das Ausgangssignal $V_2$ des Fotodetektors 2 von der Breite der schraffierten Region 42 an dem Punkt der örtlichen Lage des Objekts abhängt, bestimmt ein gegebener Wert des Ausgangssignals $V_2$ den Abstand zum Objekt nicht eindeutig. Insbesondere kann sich das Objekt entweder auf der einen Seite oder auf der anderen Seite einer Ebene 44 befinden, welche die Region 42 an ihren weitesten Punkt teilt. Um derartige doppelte Werte zu vermeiden, wird der Abstandssensor vorzugsweise so ausgestaltet, daß er die Anwesenheit eines Objekts und den Abstand zum Objekt nur auf einer Seite dieser Ebene 44 ermittelt.

Figur 8 zeigt ein optisches System mit einer einzigen Linse, bei welchem das vorstehend angesprochene Problem der doppelten Werte vermieden wird. Bei dieser Ausführungsform sind die Fotodetektoren 1 und 2 auf der gleichen Seite einer gemeinsamen Linse 46 angeordnet. So wie es in Figur 8 dargestellt ist, liegen dabei die Fotodetektoren 1 und 2 und die Lumineszenzdiode 3 vorzugsweise in einer Ebene 48, die von der Linse 46 geringfügig weiter entfernt ist als der Fokuspunkt F.

Die in Figur 8 aufgezeigte Einrichtung ist dazu bestimmt, die Anwesenheit und den Abstand eines innerhalb der schraffierten Region 50 angeordneten Objekts festzustellen. Die Größe und Form dieser schraffierten Region 50 kann dadurch verändert werden, daß man den Fotodetektor 2 entlang der Ebene 48 in einem größeren oder einem geringeren Abstand von der zentralen Achse 52 anordnet. Dies kann entweder durch eine Bewegung des Fotodetektors 2 oder durch die Auswahl eines Fotodetektors aus einer Vielzahl von Fotodetektoren bewerkstelligt werden, wobei letzteres durch zusätzliche Fotodetektoren 4 aufgezeigt ist. Durch einen Vergleich der Gestalt der schraffierten Region 50 mit der Gestalt der schraffierten Region 54 kann man feststellen, daß die Genauigkeit der Abstandsmessung gesteigert wird, wenn der Ansprechbereich des Abstandssensors verringert wird.

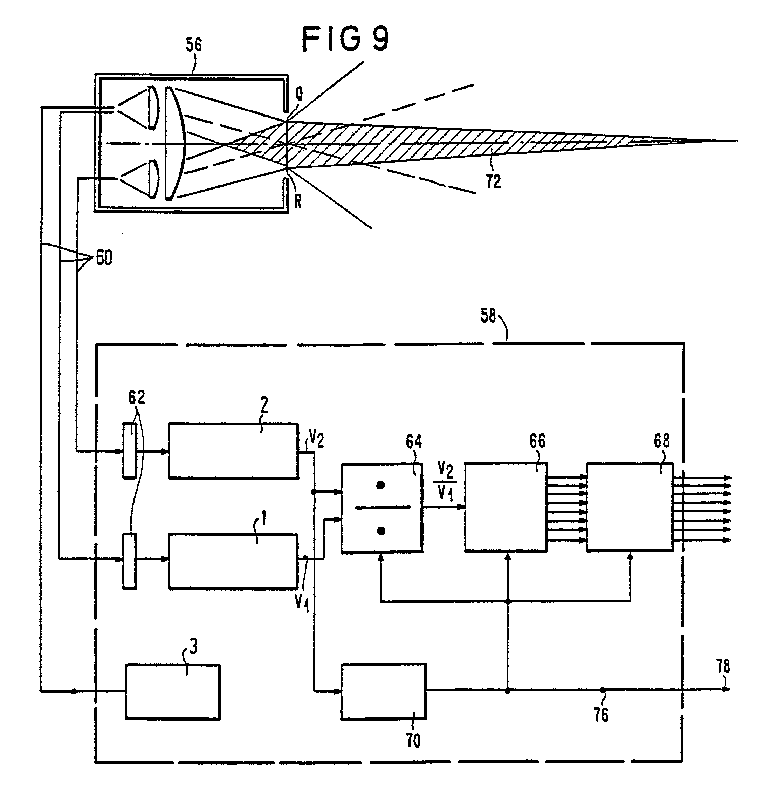

Die Figuren 9, 10 und 11 zeigen drei Ausführungsformen von erfindungsgemäßen Abstandssensoren. Die in Figur 9 dargestellte Ausführungsform umfaßt ein in einem Gehäuse untergebrachtes optisches System 56 und ein elektronisches Verarbeitungssystem 58. Dabei ist das optische System 56 über drei Lichtleitfasern 60 mit dem elektronischen Verarbeitungssystem 58 verbunden. Die Lichtleitfasern 60 dienen dazu Infrarotstrahlung oder Lichtstrahlung zu und von den zugehörigen Punkten im optischen System 56 zu übertragen. Das elektronische Verarbeitungssystem 58 umfaßt Fotodetektoren 1 und 2, die so angeordnet sind, daß sie die Strahlung von den zugehörigen Lichtleitfasern 16 über Spektralfilter 62 empfangen. Diese Spektralfilter 62 lassen nur Strahlung mit der von der Lumineszenzdiode 3 erzeugten spektralen Frequenz durch. Die Ausgangssignale $V_1$ und $V_2$ der Fotodetektoren 1 bzw. 2 werden einem Analogdividierer 64 zugeführt, welcher ein analoges Ausgangssignal erzeugt, das dem Wert $V_2/V_1$ entspricht. Dieses analoge Ausgangssignal $V_2/V_1$ gelangt zu einem Analog-Digital-Umsetzer 66, welcher seinerseits einen Festwertspeicher 68 adressiert, der eine Tabelle zur Auffindung der Objektabstände enthält. Der Festwertspeicher 68 empfängt ein digitales Signal entsprechend dem Wert $V_2/V_1$ und erzeugt ein Ausgangssignal, welches den Abstand des Objekts repräsentiert. Dementsprechend vollzieht der Festwertspeicher 68 diejenige Umformung, die in dem in Figur 6 dargestellten Diagramm für den zugehörigen Abstandssensor aufgezeigt ist. Das Ausgangssignal $V_2$ des Fotodetektors 2 wird auch einem Schwellwert-Detektor oder Schmitt-Trigger 70 zugeführt, welcher nur dann ein Ausgangssignal erzeugt, wenn sein Eingangssignal $V_2$ unterhalb eines vorgebbaren Schwellwertes liegt. Wenn das Signal $V_2$ unterhalb dieses Schwellwertes liegt, so wird unterstellt, daß sich kein Objekt innerhalb des in Figur 9 schraffiert dargestellten Sensor-Ansprechbereichs 72 des Abstandssensors befindet. Das Niveau eines derartigen Schwellwertes ist in Figur 5 durch die gestrichelte Linie 74 aufgezeigt.

Das Ausgangssignal des Schwellwert-Detektors 70 wird über eine Ausgangsleitung 76 einem Ausgangsanschluß 78 zugeführt. Dieses Ausgangssignal wird aber auch dem Analogdividierer 64, dem Analog-Digital-Umsetzer 66 und dem Festwertspeicher 68 zugeführt, um deren Inbetriebsetzung zu verhindern, wenn durch den Abstandssensor kein Objekt erfaßt wird.

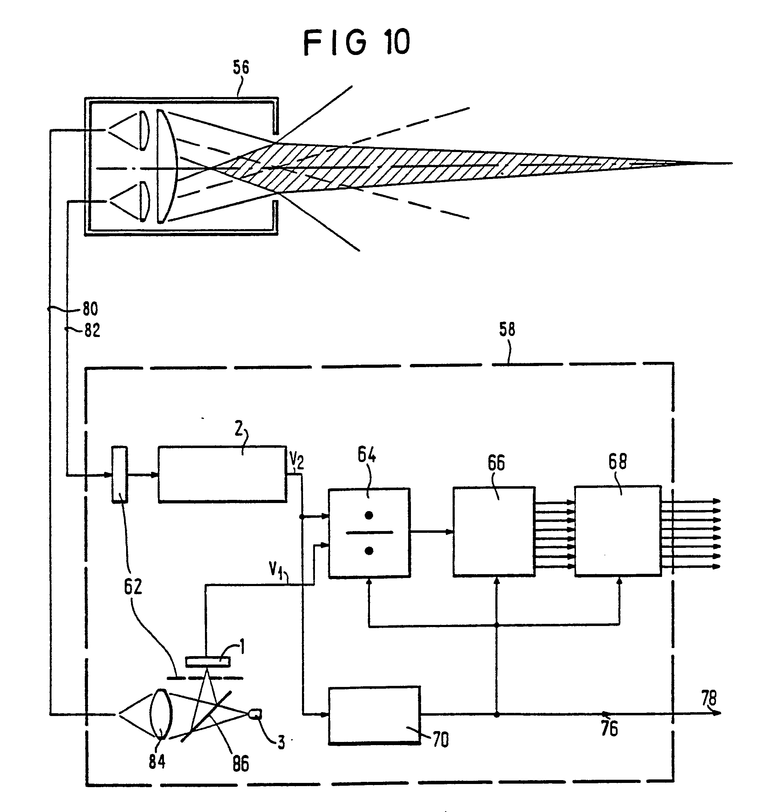

Die Ausführungsform des in Figur 10 dargestellten Abstandssensors entspricht weitgehend der in Figur 9 dargestellten Ausführungsform, wobei jedoch nur zwei Lichtleitfasern 80 und 82 zwischen dem optischen System 56 und dem elektronischen Verarbeitungssystem 58 vorgesehen sind. Bei der Ausführungsform nach Figur 10 dient die Lichtleitfaser 80 sowohl dazu, die Strahlung der Lumineszenzdiode 3 zu dem optischen System 56 zu übertragen als auch dazu, die reflektierte Strahlung von dem optischen System 56 zu dem Fotodetektor 1 zu übertragen. Wie aus der Figur 10 ersichtlich ist, werden dabei eine Linse 84 und ein Strahlteiler 86 dazu benutzt, die reflektierte Strahlung zum Fotodetektor 1 hin abzulenken.

Die Verwendung einer einzigen Lichtleitfaser 80 für die Lumineszenzdiode 3 und den Fotodetektor 1 ist deshalb besonders günstig, weil dann der Fotodetektor 1 die gleiche, identische Region erfaßt, die von der Lumineszenzdiode 3 beleuchtet ist.

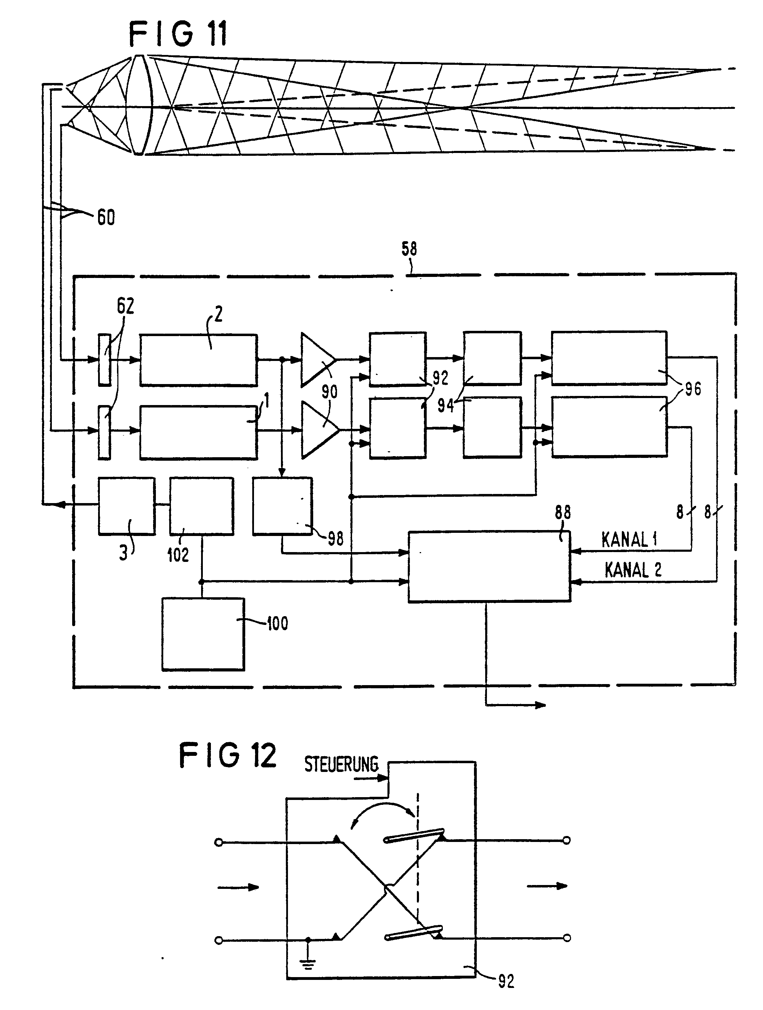

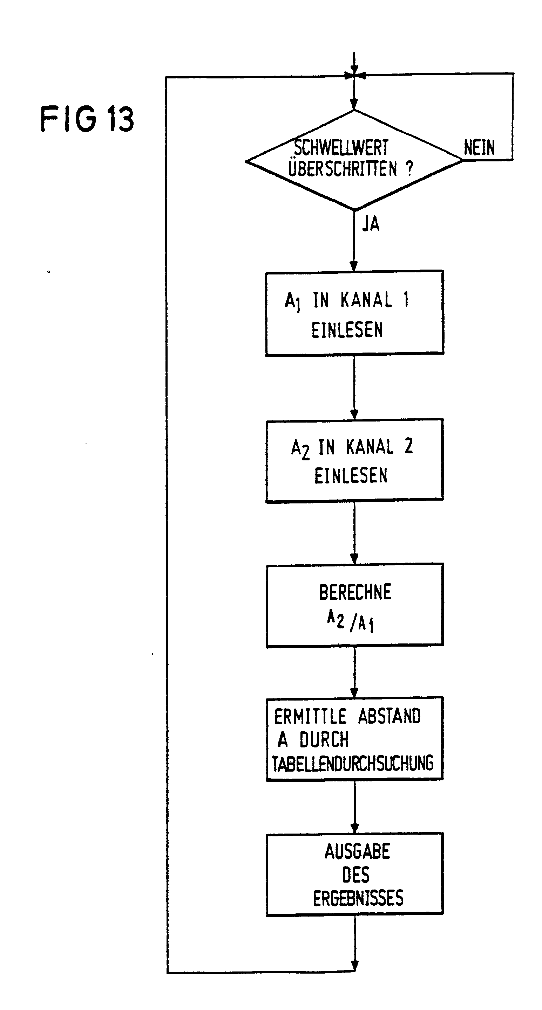

Figur 11 veranschaulicht zusammen mit den Figuren 12 und 13 eine weitere bevorzugte Ausführungsform eines erfindungsgemäßen Abstandssensors. Das hierbei verwendete optische System ist dem in Figur 8 dargestellten optischen System ähnlich. Das elektronische Verarbeitungssystem 58 verwendet einen Mikrocomputer 88, welcher die Division der entsprechenden Werte der Ausgangssignale der Fotodetektoren 1 und 2 vollzieht und das Umformungs-Verfahren zur Auffindung der Abstände durchführt.

Wie es in Figur 11 aufgezeigt ist, umfaßt das elektronische Verarbeitungssystem 58 an die Ausgänge der Fotodetektoren 1 und 2 angeschlossene Verstärker 90, sowie Polumschalter 92, Tiefpaßfilter 94 und Analog-Digital-Umsetzer 96. Ein Schwellwert-Detektor oder Schmitt-Trigger 98 führt einem Eingang des Mikrocomputers 88 ein Signal zu, wenn das Ausgangssignal des Fotodetektors 2 unterhalb eines vorgegebenen Schwellwertes liegt. Ein Rechteckgenerator 100 steuert sowohl einen der Lumineszenzdiode zugeordneten Treiber 102 als auch die beiden Polumkehrschalter 92 an. Die Lumineszenzdiode 3 ist daher synchron mit den Polumkehrschaltern 92 getaktet, um zur Vermeidung von Hintergrundrauschen eine beispielsweise in der US-A-3 937 574 näher beschriebene « Synchrone Detektion » zu bewerkstelligen.

Figur 12 zeigt die Ausgestaltung der in Figur 11 verwendeten Polumkehrschalter 92. Die beiden Eingänge und die beiden Ausgänge werden in Abhängigkeit von der Steuerung einmal geradlinig durchgeschaltet und einmal überkreuz durchgeschaltet, wobei in der Zeichnung die kreuzweise Verbindung aufgezeigt ist.

Figur 13 zeigt ein Flußdiagramm mit den grundlegenden von dem Mikrocomputer auszuführenden Operationen.

**Patentansprüche**

1. Abstandssensor zur Ermittlung des Abstandes (A) zu einem nahegelegenen Objekt, mit

— einer Lichtquelle (3) zur Beleuchtung des Objekts,

— einer sich entlang einer ersten Achse erstreckenden definierten Beleuchtungsregion der Lichtquelle (3),

— einem ersten lichtempfindlichen Empfänger (2), welcher vom Objekt reflektiertes Licht empfängt, und ein der Strahlungsintensität des empfangenen Lichtes entsprechendes erstes Signal ($V_2$) erzeugt,

— einer sich entlang einer zweiten Achse (16) erstreckenden definierten Empfangsregion des ersten lichtempfindlichen Empfängers (2) und

— einem durch den Überschneidungsbereich von Beleuchtungsregion und Empfangsregion definierten Sensor-Ansprechvolumen, gekennzeichnet durch folgende Merkmale :

a) ein zweiter lichtempfindlicher Empfänger (1) empfängt an einem unmittelbar neben dem Emissionspunkt der Lichtquelle gelegenen Empfangspunkt vom Objekt reflektiertes Licht und erzeugt ein der Strahlungsintensität des empfangenen Lichtes entsprechendes zweites Signal ($V_1$),

b) die Empfangspunkte des ersten lichtempfindlichen Empfängers (2) und des zweiten lichtempfindlichen Empfängers (1) weisen den gleichen Abstand zum Objekt auf,

c) das erste Signal ($V_2$) wird durch das zweite Signal ($V_1$) in einer ersten Elektronikeinheit normiert, wobei ein drittes Signal erzeugt wird.

2. Abstandssensor nach Anspruch 1, dadurch gekennzeichnet, daß die zweite Achse (35) zumindest annähernd parallel zur ersten Achse (33) verläuft.

3. Abstandssensor nach Anspruch 1 oder 2, gekennzeichnet durch eine auf das dritte Signal ansprechende zweite Elektronikeinheit, welche ein viertes Signal erzeugt, das dem Abstand (A) zwischen den Empfangspunkten des ersten und zweiten lichtempfindlichen Empfängers einerseits und dem Objekt andererseits entspricht.

4. Abstandssensor nach einem der vorhergehenden Ansprüche, dadurch gekennzeichnet, daß das dritte Signal dem Quotienten aus dem ersten Signal ($V_2$) und dem zweiten Signal ($V_1$) entspricht.

5. Abstandssensor nach einem der vorhergehenden Ansprüche, dadurch gekennzeichnet, daß die Lichtquelle eine Lumineszenzdiode (3) aufweist.

6. Abstandssensor nach einem der vorhergehenden Ansprüche, dadurch gekennzeichnet, daß die Lichtquelle ein lichtemittierendes Bauelement und eine sich zwischen diesem lichtemittierenden Bauelement und dem Emissionspunkt erstreckende Lichtleitfaser (60) aufweist.

7. Abstandssensor nach einem der vorhergehenden Ansprüche, gekennzeichnet durch eine im wesentlichen koaxial zur ersten Achse (33) angeordnete Linse (34) zum Fokussieren der von der Lichtquelle aus auf das Objekt gerichteten Lichtstrahlen.

8. Abstandssensor nach einem der vorhergehenden Ansprüche, gekennzeichnet durch eine im wesentlichen koaxial zur zweiten Achse (35) angeordnete Linse (36) zum Fokussieren der vom Objekt reflektierten Lichtstrahlen.

9. Abstandssensor nach einem der Ansprüche 1 bis 6, gekennzeichnet durch eine im wesentlichen koaxial zur ersten Achse und zur zweiten Achse angeordnete gemeinsame Linse (46) zum Fokussieren der auf das Objekt gerichteten Lichtstrahlen und der vom Objekt reflektierten Lichtstrahlen.

10. Abstandssensor nach einem der vorhergehenden Ansprüche, dadurch gekennzeichnet, daß der erste lichtempfindliche Empfänger ein erstes lichtempfindliches Bauelement und eine sich zwischen diesem ersten lichtempfindlichen Bauelement und dem zugeordneten ersten Empfangspunkt erstreckende Lichtleitfaser (60 ; 82) aufweist.

11. Abstandssensor nach Anspruch 10, dadurch gekennzeichnet, daß der erste Empfangspunkt auf der zweiten Achse liegt.

12. Abstandssensor nach einem der vorhergehenden Ansprüche, dadurch gekennzeichnet, daß der zweite lichtempfindliche Empfänger ein zweites lichtempfindliches Bauelement und eine sich zwischen diesem zweiten lichtempfindlichen Bauelement und dem zugeordneten zweiten Empfangspunkt erstreckende Lichtleitfasern (60) aufweist.

13. Abstandssensor nach Anspruch 12, dadurch gekennzeichnet, daß der zweite Empfangspunkt unmittelbar neben dem auf der ersten Achse liegenden Emissionspunkt der Lichtquelle liegt.

14. Abstandssensor nach Anspruch 6, dadurch gekennzeichnet, daß der zweite lichtempfindliche Empfänger ein zweites lichtempfindliches Bauelement und einen Strahlteiler (86) aufweist, welcher zwischen dem lichtemittierenden Bauelement und der Lichtleitfaser (80) angeordnet ist, wobei der Strahlteiler (86) die vom dem lichtemittierenden Bauelement ausgehenden Lichtstrahlen der Lichtleitfaser (80) und die von der Lichtleitfaser (80) ausgehenden Lichtstrahlen dem zweiten lichtemittierenden Bauelement zuführt.

15. Abstandssensor nach einem der vorhergehenden Ansprüche, gekennzeichnet durch einen auf das erste Signal ($V_2$) ansprechenden Schwellwert-Detektor (70), der ein fünftes Signal erzeugt, welches anzeigt, ob die Strahlungsintensität des von dem ersten lichtempfindlichen Empfänger empfangenen Lichtes über oder unter einem vorgegebenen Schwellwert liegt und dadurch die Anwesenheit oder Abwesenheit eines Objekts anzeigt.

16. Abstandssensor nach den Ansprüchen 1, 3 und 4, dadurch gekennzeichnet, daß der erste lichtempfindliche Empfänger mit einem ersten Analog-Digital-Umsetzer (96) verbunden ist, daß der zweite lichtempfindliche Empfänger mit einem zweiten Analog-Digital-Umsetzer (96) verbunden ist und daß die erste und die zweite Elektronikeinheit einen Mikroprozessor (88) zur Berechnung des Quotienten ($V_2/V_1$) aus dem ersten und dem zweiten Signal und zur Ermittlung des Abstandes (A) zum Objekt umfassen.

17. Abstandssensor nach einem der vorhergehenden Ansprüche, dadurch gekennzeichnet, daß dem ersten und dem zweiten lichtempfindlichen Empfänger Schaltelemente zugeordnet sind, durch welche jeweils die Polaritäten des ersten bzw. zweiten Signals umschaltbar sind und daß an die Lichtquelle und die Schaltelemente ein Rechteckgenerator (100) angeschlossen ist, durch welchen die Schaltelemente synchron mit der Lichtquelle betätigbar sind.

18. Abstandssensor nach einem der vorhergehenden Ansprüche, dadurch gekennzeichnet, daß die zweite Achse (35) die erste Achse (33) zwischen dem ersten und zweiten lichtempfindlichen Empfänger einerseits und dem Objekt andererseits schneidet.

**Claims**

1. A distance sensor for determining the distance (A) to a close-lying object comprising :
— a light source (3) for the illumination of the object ;
— a defined illumination region of the light source (3) which extends along a first axis ;
— a first light-sensitive receiver (2) which receives light reflected by the object and produces a first signal ($V_2$) corresponding to the radiation intensity of the received light ;
— a defined receiving region of the first light-sensitive receiver (2) which extends along a second axis (16) ; and
— a sensor-response volume which is defined by the overlap zone of illumination region and receiving region, characterised by the following features :
a) at a receiving point located directly beside the emission point of the light source, a second light-sensitive receiver (1) receives light reflected by the object and produces a second signal ($V_1$) which corresponds to the radiation intensity of the received light ;

b) the receiving points of the first light-sensitive receiver (2) and the second light-sensitive receiver (1) possess the same distance to the object ; and

c) the first signal ($V_2$) is standardised by the second signal ($V_1$) in a first electronics unit, whereby a third signal is produced.

2. A distance sensor as claimed in Claim 1, characterised in that the second axis (35) extends at least approximately in parallel to the first axis (33).

3. A distance sensor as claimed in Claim 1 or Claim 2, characterised by a second electronics unit which responds to the third signal and which produces a fourth signal which corresponds to the distance (A) between the receiving points of the first and second light-sensitive receivers on the one hand, and the object on the other hand.

4. A distance sensor as claimed in one of the preceding Claims, characterised in that the third signal corresponds to the quotient of the first signal ($V_2$) and the second signal ($V_1$).

5. A distance sensor as claimed in one of the preceding Claims, characterised in that the light source comprises a LED (3).

6. A distance sensor as claimed in one of the preceding Claims, characterised in that the light source comprises a light-emitting component and a light-conducting fibre (60) which extends between this light-emitting component and the emission point.

7. A distance sensor as claimed in one of the preceding Claims, characterised by a lens (34) which is arranged fundamentally coaxially with the first axis (33) and which serves to focus the light beams directed from the light source onto the object.

8. A distance sensor as claimed in one of the preceding Claims, characterised by a lens (36) which is arranged fundamentally coaxially with the second axis (35), and which serves to focus the light beams reflected by the object.

9. A distance sensor as claimed in one of Claims 1 to 6, characterised by a common lens (46) which is arranged fundamentally coaxially with the first axis and the second axis, and which serves to focus the light beams directed towards the object and the light beams reflected by the object.

10. A distance sensor as claimed in one of the preceding Claims, characterised in that the first light-sensitive receiver comprises a first light-sensitive component and a light-conducting fibre (60 ; 82) which extends between this first light-sensitive component and the assigned first receiving point.

11. A distance sensor as claimed in Claim 10, characterised in that the first receiving point is located on the second axis.

12. A distance sensor as claimed in one of the preceding Claims, characterised in that the second light-sensitive receiver comprises a second light-sensitive component and a light-conducting fibre (60) which extends between this second light-sensitive component and the assigned second receiving point.

13. A distance sensor as claimed in Claim 12, characterised in that the second receiving point is located directly beside the emission point of the light source, which is located on the first axis.

14. A distance sensor as claimed in Claim 6, characterised in that the second light-sensitive receiver includes a second light-sensitive component and a beam-splitter (86) which is arranged between the light-emitting component and the light-conducting fibre (80), where the beam-splitter (86) conducts the light beams emitted from the light-emitting component to the light-conducting fibre (80), and conducts the light beams emitted from the light-conducting fibre (80) to the second light-emitting component.

15. A distance sensor as claimed in one of the preceding Claims, characterised by a threshold value detector (70) which responds to the first signal ($V_2$) and which produces a fifth signal which indicates whether the radiation intensity of the light received by the first light-sensitive receiver falls above or below a predetermined threshold value, and thus indicates the presence or absence of an object.

16. A distance sensor as claimed in Claims 1, 3 and 4, characterised in that the first light-sensitive receiver is connected to a first analogue/digital converter (96), that the second light-sensitive receiver is connected to a second analogue/digital converter (96), and that the first and second electronic units comprise a microprocessor (88) which calculates the quotient ($V_2/V_1$) of the first and second signals, and which determines the distance (A) to the object.

17. A distance sensor as claimed in one of the preceding Claims, characterised in that the first and second light-sensitive receivers are assigned switching elements by which the polarities of the first and second signals can be switched over, and characterised in that the light source and the switching elements are connected to a rectangular waveform generator (100) by which the switching elements can be actuated in synchronism with the light source.

18. A distance sensor as claimed in one of the preceding Claims, characterised in that the second axis (35) intersects the first axis (33) between the first and second light-sensitive receivers on the one hand, and the object on the other hand.

**Revendications**

1. Capteur de proximité pour déterminer la distance (A) à un objet situé à proximité, comprenant

— une source lumineuse (3) pour éclairer l'objet,

— une région d'éclairement définie de la source lumineuse (3), s'étendant le long d'un premier axe,

— un premier récepteur (2) photosensible, qui reçoit de la lumière réfléchie par l'objet et génère un premier signal ($V_2$) correspondant à l'intensité de rayonnement de la lumière reçue,

— une région de réception définie du premier récepteur (2) photosensible, s'étendant le long d'un second axe (16) et

— un volume de réponse du capteur, défini par la zone de chevauchement de la région d'éclairement et de la région de réception, caractérisé en ce que :

a) un second récepteur (1) photosensible reçoit de la lumière réfléchie par l'objet, en un point de réception situé directement à côté du point d'émission de la source lumineuse et génère un deuxième signal ($V_1$) correspondant à l'intensité de rayonnement de la lumière reçue,

b) les points de réception du premier récepteur (2) photosensible et du second récepteur (1) photosensible présentent la même distance par rapport à l'objet et

c) le premier signal ($V_2$) est normalisé par le deuxième signal ($V_1$) dans une première unité électronique, avec génération d'un troisième signal.

2. Capteur selon la revendication 1, caractérisé en ce que le second axe (35) est au moins à peu près parallèle au premier axe (33).

3. Capteur selon la revendication 1 ou 2, caractérisé par une seconde unité électronique, réagissant au troisième signal et générant un quatrième signal qui correspond à la distance entre les points de réception des premier et second récepteurs photosensibles d'une part et l'objet d'autre part.

4. Capteur selon une des revendications précédentes, caractérisé en ce que le troisième signal correspond au quotient du premier signal ($V_2$) et du deuxième signal ($V_1$).

5. Capteur selon une des revendications précédentes, caractérisé en ce que la source lumineuse présente une diode électroluminescente (3).

6. Capteur selon une des revendications précédentes, caractérisé en ce que la source lumineuse présente un composant émetteur de lumière et une fibre optique (60) s'étendant entre ce composant émetteur de lumière et le point d'émission.

7. Capteur selon une des revendications précédentes, caractérisé par une lentille (34), disposée à peu près coaxialement par rapport au premier axe (33), pour la focalisation des rayons lumineux dirigés par la source lumineuse sur l'objet.

8. Capteur selon une des revendications précédentes, caractérisé par une lentille (36), disposée à peu près coaxialement par rapport au second axe (35), pour focaliser les rayons lumineux réfléchis par l'objet.

9. Capteur selon une des revendications 1 à 6, caractérisé par une lentille (46) commune, disposée à peu près coaxialement par rapport au premier et au second axe, pour la focalisation des rayons lumineux dirigés vers l'objet et des rayons lumineux réfléchis par l'objet.

10. Capteur selon une des revendications précédentes, caractérisé en ce que le premier récepteur photosensible présente un premier composant photosensible et une fibre optique (60 ; 82) s'étendant entre ce premier composant photosensible et le premier point d'émission coordonné.

11. Capteur selon la revendication 10, caractérisé en ce que le premier point de réception est situé sur le second axe.

12. Capteur selon une des revendications précédentes, caractérisé en ce que le second récepteur photosensible présente un second composant photosensible et une fibre optique (60) s'étendant entre ce second composant photosensible et le second point de réception coordonné.

13. Capteur selon la revendication 12, caractérisé en ce que le second point de réception se trouve directement à côté du point d'émission, situé sur le premier axe, de la source lumineuse.

14. Capteur selon la revendication 6, caractérisé en ce que le second récepteur photosensible présente un second composant photosensible et un séparateur de faisceau (86), lequel est disposé entre le composant émetteur de lumière et la fibre optique (80), le séparateur de faisceau (86) amenant les rayons lumineux issus du composant émetteur de lumière a la fibre optique (80) et amenant les rayons lumineux issus de la fibre optique (80) au second composant photosensible.

15. Capteur selon une des revendications précédentes, caractérisé par un détecteur de seuil (70), réagissant au premier signal ($V_2$), générant un cinquième signal qui indique si l'intensité de rayonnement de la lumière reçue par le premier récepteur photosensible est supérieure ou inférieure à un seuil préfixé, indiquant ainsi la présence ou l'absence d'un objet.

16. Capteur selon les revendications 1, 3 et 4, caractérisé en ce que le premier récepteur photosensible est relié à un premier convertisseur analogique-numérique (96), que le second récepteur photosensible est relié à un second convertisseur analogique-numérique (96) et que les première et seconde unités électroniques comprennent un microprocesseur (88) pour calculer le quotient ($V_2/V_1$) du premier et du deuxième signal et pour déterminer la distance (A) à l'objet.

17. Capteur selon une des revendications précédentes, caractérisé en ce que des éléments de commutation sont coordonnés aux premier et second récepteurs photosensibles, éléments par lesquels peuvent être inversées les polarités du premier respectivement du deuxième signal, et en ce qu'un générateur d'impulsions rectangulaires (100) est raccordé à la source lumineuse et aux éléments de commutation en vue de l'actionnement des éléments de commutation en synchronisme avec la source lumineuse.

18. Capteur selon une des revendications précédentes, caractérisé en ce que le second axe (35) coupe le premier axe (33) entre les premier et second récepteurs photosensibles d'une part et l'objet d'autre part.

# FIG 1
STAND DER TECHNIK

# FIG 2

# FIG 3

# FIG 4

1 3 26 24 30 32

$\theta_2$ $\theta_1$

2 28 22

# FIG 5

V

$V_1$

$V_2$

74

A

# FIG 6

V

$V_2/V_1$

A

2

# FIG 7

# FIG 8

# FIG 9

# FIG 10

# FIG 11

60

58

62

2

90

92

94

96

1

3

102

98

88

8 / 8

KANAL 1

KANAL 2

100

# FIG 12

STEUERUNG

92

**FIG 13**

SCHWELLWERT
ÜBERSCHRITTEN ?  — NEIN

JA

$A_1$ IN KANAL 1
EINLESEN

$A_2$ IN KANAL 2
EINLESEN

BERECHNE
$A_2/A_1$

ERMITTLE ABSTAND
A DURCH
TABELLENDURCHSUCHUNG

AUSGABE
DES
ERGEBNISSES